# EUROPÄISCHE PATENTSCHRIFT

(11) **EP 3 908 474 B1**
(45) Veröffentlichungstag und Bekanntmachung des Hinweises auf die Patenterteilung: **17.06.2026**
(21) Anmeldenummer: 20797709.1
(22) Anmeldetag: 23.10.2020
(51) Int. Cl.: B60K 35/10, G02F 1/133, G06F 3/041, B60K 35/22, B60K 35/81, B60K 35/90

(54) **BEDIEN- UND/ODER ANZEIGEVORRICHTUNG**
OPERATOR CONTROL AND/OR DISPLAY DEVICE
DISPOSITIF D'AFFICHAGE ET/OU DE COMMANDE D'OPÉRATEUR

(30) Priorität: 20.01.2020 DE 102020000278
(43) Veröffentlichungstag der Anmeldung: 17.11.2021
(73) Patentinhaber: Marquardt GmbH, 78604 Rietheim-Weilheim (DE)
(72) Erfinder: WEISSER, Dietmar, 78532 Tuttlingen (DE)
(74) Vertreter: Staeger & Sperling Partnerschaftsgesellschaft mbB
(86) Internationale Anmeldenummer: PCT/EP2020/079936
(87) Internationale Veröffentlichungsnummer: WO 2021/148158

(56) Entgegenhaltungen:
- WO-A1-2017/203970
- CN-A- 108 682 390
- DE-A1- 102013 106 105
- US-A1- 2018 301 071
- US-A1- 2020 317 213
- US-A1- 2021 013 283

## Beschreibung

Die Erfindung geht aus von einer Bedien- und/oder Anzeigevorrichtung nach dem Oberbegriff des Patentanspruchs 1.

Eine solche Bedien- und/oder Anzeigevorrichtung kann in der Art eines Touchscreens ausgebildet sein. Solch ein Touchscreen kann als ein LCD (Liquid Cristal Display) -Bauelement zur Anzeige und/oder zur Bedienung in einem Kraftfahrzeug, insbesondere im Bereich des autonomen Fahrens, Verwendung finden. Beispielsweise kann die Bedien- und/oder Anzeigevorrichtung in einem Lenkrad des Kraftfahrzeugs eingesetzt werden.

Eine derartige Bedien- und/oder Anzeigevorrichtung umfasst ein Anzeigeelement. Auf dem Anzeigeelement ist wenigstens ein Bildelement mittels für den Benutzer sichtbarer Lichtstrahlung darstellbar. Dabei ist die korrekte Darstellung des Bildelements erforderlich, um dem Benutzer die benötigte Information bereitzustellen und/oder die gewünschte Bedienung zu ermöglichen. Insbesondere ist für das Kraftfahrzeug, und zwar auch besonders für autonom fahrende Kraftfahrzeuge, aus Sicherheitsgründen erforderlich, dass das Bildelement bei entsprechender Ansteuerung auf dem Anzeigeelement dargestellt wird.

Aus der CN 108 682 390 A ist ein Display bekannt, welches Sensoren zur Helligkeitserfassung aufweist, durch welche eine Ist-Helligkeit von Pixeln erfassbar und mit einer Soll-Helligkeit der Pixel vergleichbar ist. Weiterer relevanter Stand der Technik auf diesem Gebiet ist zudem durch die Schriften WO 2017/203970 A1 und DE 10 2013 106105 A1 gegeben.

Der Erfindung liegt die Aufgabe zugrunde, die Bedien- und/oder Anzeigevorrichtung derart weiterzuentwickeln, dass die korrekte Darstellung auf dem Anzeigeelement überprüfbar ist, insbesondere soll eine fehlende Darstellung des Bildelements auf dem Anzeigeelement erkannt werden. Vor allem soll auch die Erkennung eines defekten Anzeigeelements gewährleistet sein.

Erfindungsgemäß wird daher eine Bedien- und/oder Anzeigevorrichtung gemäß Anspruch 1 vorgeschlagen, welche die gestellte Aufgabe löst.

Bei der erfindungsgemäßen Bedien- und/oder Anzeigevorrichtung, wie sie durch die Merkmale des Hauptanspruchs bestimmt ist, ist ein Sensor zur Detektierung der Darstellung des Bildelements vorgesehen. Insbesondere detektiert der Sensor Helligkeitsänderungen auf dem Anzeigeelement. Solche Helligkeitsänderungen bilden ein Kriterium für die Darstellung der Informationen auf dem Anzeigeelement. In einfacher Art und Weise lässt sich dadurch ein nicht korrekt arbeitendes, insbesondere ein defektes Anzeigeelement erkennen, und es lassen sich daraufhin entsprechende Vorsorgemaßnahmen treffen. In vorteilhafter Weise ist dadurch die Sicherheit für den Benutzer der Bedien- und/oder Anzeigevorrichtung gesteigert. Für Kraftfahrzeuge lässt sich dadurch die Sicherheitsanforderung ASIL C erfüllen. Weitere Ausgestaltungen der Erfindung sind Gegenstand der Unteransprüche.

In einer weiteren Ausgestaltung kann es sich bei dem Bildelement um die Darstellung eines Bedienelements handeln. Mittels eines Objekts, und zwar insbesondere mittels eines menschlichen Fingers, kann auf das Bedienelement einwirkbar sein, derart, dass ein zur Einwirkung korrespondierendes Signal erzeugbar ist. Das Signal kann insbesondere in der Art eines Schaltsignals zum Bedienen und/oder Auslösen einer Funktion Verwendung finden. In ergonomisch bedienbarer Art und Weise kann das Anzeigeelement als eine kapazitive Touchfläche ausgebildet sein. Eine solche Bedien- und/oder Anzeigevorrichtung ist trotz gesteigerter Sicherheit vom Benutzer in einfacher Art und Weise bedienbar.

In funktionssicherer und dennoch kostengünstiger Art und Weise kann der Sensor Helligkeitsänderungen mittels einer Änderung des elektrischen Widerstands am Anzeigeelement detektieren.

In einer weiteren Ausgestaltung kann hierfür der Sensor eine Beschichtung des Anzeigeelements umfassen, deren Widerstand sich über die Helligkeit ändert. Dadurch ist ein lichtabhängiger Parallelwiderstand zum Sensorkondensator für die kapazitive Bedienung des Anzeigeelements gebildet, wobei der Parallelwiderstand beispielsweise über die Entladekurve bestimmt werden kann. Die Beschichtung kann in einfacher Art und Weise durch einen weiteren Bedruckungsvorgang auf dem bereits auf dem Anzeigeelement gebildeten kapazitiven Touchsensor aufgebracht werden. Die Materialauswahl und/oder die Dicke der Beschichtung sollte zweckmäßigerweise so erfolgen, dass der Widerstand groß genug ist, um die normale Messung der Kapazität nicht zu stark zu beeinflussen und/oder um eine gute Transmission für die Lichtstrahlung zu bieten.

In einer weiteren Ausführung kann der Sensor Helligkeitsänderungen mittels des Photoeffekts, also durch die Freisetzung von Elektronen bei Lichteinfall, detektieren. Erfindungsgemäß umfasst der Sensor hierfür eine Beschichtung des Anzeigeelements, deren Material durch Licht elektrische Ladungen freisetzt. Die in der Art des äußeren fotoelektrischen Effekts freigesetzten Ladungen verändern die Ladung des für die Bedienung durch den Benutzer gebildeten Sensorkondensators, was wiederum zur Überprüfung der korrekten Funktionsweise des Anzeigeelements herangezogen werden kann. Die Beschichtung kann wiederum in einfacher Art und Weise durch Bedrucken auf dem Anzeigeelement aufgebracht werden.

Für eine besonders bevorzugte Ausgestaltung der Erfindung ist nachfolgendes festzustellen.

Im Zuge der Entwicklungen für autonomes Fahren werden immer mehr Forderungen bezüglich der Sicherheit an Displays gestellt, die im Kraftfahrzeug eingesetzt werden. Bei der Anforderung ASIL C für Displays muss überprüft werden, ob Bildinhalte dargestellt werden. Zur Umsetzung dieser Anforderung schlägt die Erfindung vor, den bisherigen kapazitive Touchscreen wie folgt zu erweitern:
- Durch eine weitere Schicht, deren Widerstand sich über die Helligkeit ändert. Dadurch ergibt sich ein lichtabhängiger Parallelwiderstand zum Sensorkondensator, welcher z.B. über die Entladekurve bestimmt werden kann. Diese Schicht kann durch einen weiteren Bedruckungsvorgang auf einen bestehenden kapazitiven Touchsensor aufgebracht werden. Die Materialauswahl und Dicke der Schicht erfolgt zweckmäßigerweise so, dass der Widerstand groß genug ist, um die normale Messung der Kapazität nicht zu stark zu beeinflussen und eine gute Transmission für das Licht zu bieten.
- Erfindungsgemäß durch die Wahl eines speziellen Materials für die Sensorelektroden, welches durch das Licht Ladungen freisetzt. Diese Ladungen verändern aufgrund des äußeren fotoelektrischen Effekts die Ladung des Sensorkondensators.

Geschaffen ist mittels der Erfindung insbesondere eine Helligkeitsdetektion in einem Display über die Touchfolie, welche zur Überprüfung der korrekten Funktion des Displays dient.

Die mit der Erfindung erzielten Vorteile bestehen insbesondere darin, dass die Bedien- und/oder Anzeigevorrichtung eine erhöhte Funktionssicherheit für den Benutzer bietet. Vor allem wird die ASIL C Anforderung erfüllt, so dass die Bedien- und/oder Anzeigevorrichtung bei sicherheitskritischen Anwendungen, insbesondere in Kraftfahrzeugen, autonom fahrenden Fahrzeugen, Flugzeugen o. dgl., in vorteilhafter Weise einsetzbar ist.

Ein Ausführungsbeispiel der Erfindung mit verschiedenen Weiterbildungen und Ausgestaltungen ist in den Zeichnungen dargestellt und wird im Folgenden näher beschrieben. Es zeigen
- Fig. 1: eine Bedien- und/oder Anzeigevorrichtung in der Art eines Touchscreens mit einem Anzeigeelement,
- Fig. 2: die nähere Ausgestaltung des Anzeigeelements in schematischer Ansicht,
- Fig. 3: einen vergrößerten Detailausschnitt aus Fig. 2,
- Fig. 4: einen Schnitt entlang der Linie 4-4 in Fig. 3 für einen herkömmlichen Touchscreen,
- Fig. 5: einen Schnitt entlang der Linie 4-4 in Fig. 3 für einen erfindungsgemäßen Touchscreen entsprechend einer ersten Ausführung und
- Fig. 6: einen Detailausschnitt wie in Fig. 3 für einen erfindungsgemäßen Touchscreen entsprechend einer zweiten Ausführung.

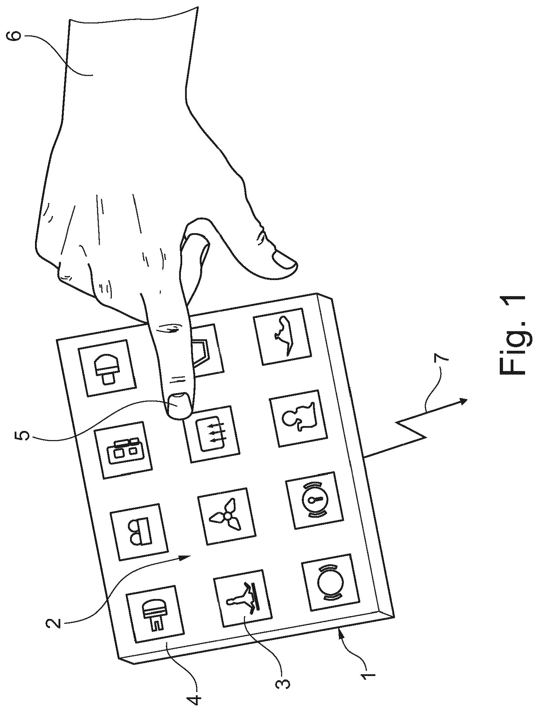

In Fig. 1 ist eine Bedien- und/oder Anzeigevorrichtung 1 in der Art eines Touchscreens zu sehen, die insbesondere in einem Kraftfahrzeug Verwendung findet. Die Bedien- und/oder Anzeigevorrichtung 1 weist ein als eine kapazitive Touchfläche ausgebildetes Anzeigeelement 2 auf. Auf dem Anzeigeelement 2 ist wenigstens ein Bildelement 3 mittels für den Benutzer sichtbarer Lichtstrahlung darstellbar. Zur Überprüfung der Funktionsfähigkeit des Anzeigeelements 2 ist ein Sensor 4 zur Detektierung der Darstellung des Bildelements 3 vorgesehen.

Und zwar detektiert der Sensor 4 Helligkeitsänderungen auf dem Anzeigeelement 2.

Bei dem Bildelement 3 handelt es sich um die Darstellung eines Bedienelements zur Bedienung von Funktionen durch den Benutzer. Beispielsweise kann es sich bei diesen Funktionen um die Bedienung der Klimaanlage, des Navigationsgerätes, des Radios o. dgl. im Kraftfahrzeug handeln. Zur Bedienung ist mittels eines Objekts 5, bei dem es sich beispielsweise um den Finger 5 einer menschlichen Hand 6 handeln kann, auf das Bedienelement 3 einwirkbar. Dabei ist von der Bedien- und/oder Anzeigevorrichtung 1 ein zur Einwirkung korrespondierendes Signal 7 erzeugbar. Das Signal 7 dient wiederum in der Art eines Schaltsignals zum Bedienen und/oder Auslösen der jeweiligen, vom Bildelement 3 symbolisierten Funktion.

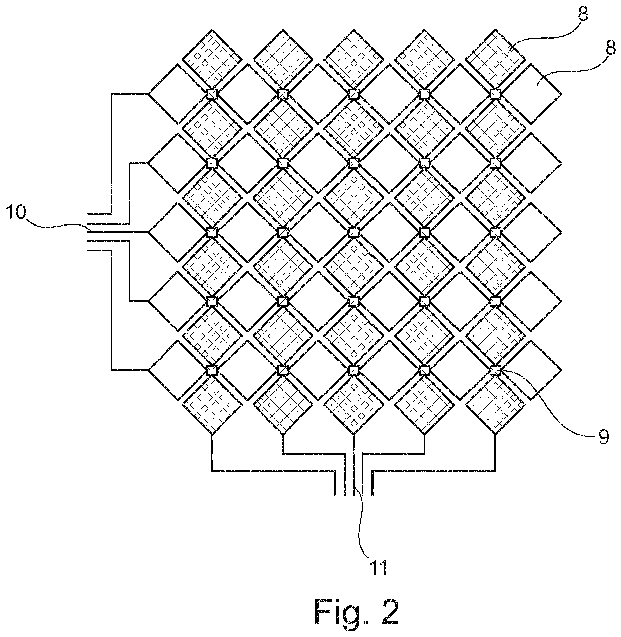

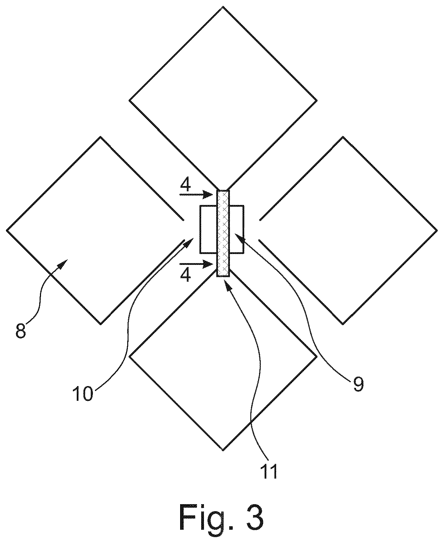

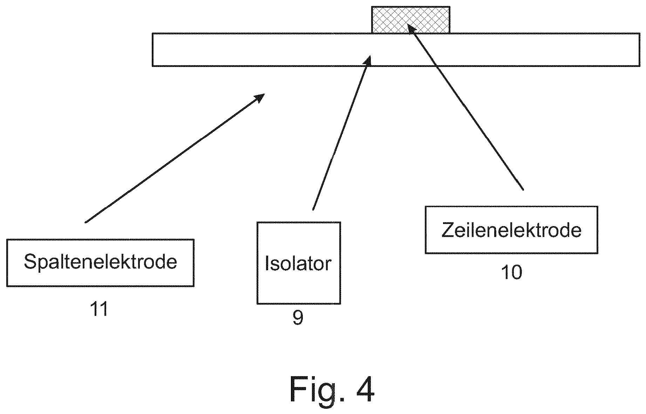

Der nähere Aufbau der kapazitiven Touchfläche auf dem Anzeigeelement 2, das beispielsweise eine LCD (Liquid Crystal Display) -Anzeige zur Darstellung des Bildelements 3 umfasst, ist in Fig. 2 zu sehen. Die Touchfläche auf dem Anzeigeelement 2 umfasst matrixförmig angeordnete, punktförmige Flächen 8 aus für Licht durchsichtigem Leitermaterial. Beispielsweise können die Flächen 8 von gedruckten elektrisch leitfähigen Punkten (PDOT) aus Indiumzinnoxid (ITO), Silber-Nanowires o. dgl. gebildet und zeilen- sowie spaltenweise miteinander verbunden sein, um die kapazitive Bedienung für den Benutzer bereitzustellen. Hierbei wird die Position des Fingers 5 über das kapazitive Verhältnis der verschiedenen, vom Finger 5 beaufschlagten Flächen 8, die dadurch einen Sensorkondensator bilden, ermittelt. Eine ohmsche Verbindung zwischen den Zeilen und Spalten der Flächen 8 ist hierbei normalerweise nicht erwünscht. Wie weiter aus Fig. 3 und Fig. 4 hervorgeht sind bei der Realisierung des Anzeigeelements 2 mittels Zeilen und Spalten bei einseitigem Aufbau Isolatorschichten 9 zwischen den Zeilenelektroden 10 und Spaltenelektroden 11, die die jeweiligen Flächen 8 elektrisch verbinden, angeordnet, um diese elektrisch zu isolieren.

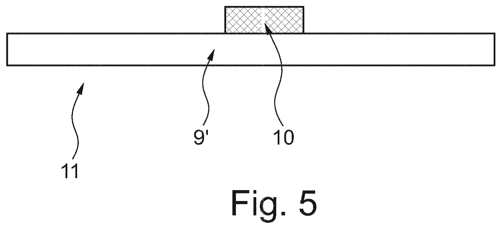

In einer ersten, nicht erfindungsgemäßen Ausführung detektiert der Sensor 4 Helligkeitsänderungen, die durch die Anzeige des Bildelementes 3 hervorgerufen werden, mittels einer Änderung des elektrischen Widerstands am Anzeigeelement 2. Der Sensor 4 umfasst eine Beschichtung des Anzeigeelements 2, deren Widerstand sich über die Helligkeit ändert. Wie in Fig. 5 gezeigt ist, ist dazu die Isolatorschicht 9 durch ein Material 9' ersetzt, welches seine elektrische Leitfähigkeit in Abhängigkeit von der Helligkeit ändert. Dadurch ergibt sich ein lichtabhängiger Parallelwiderstand zum Sensorkondensator für die kapazitive Bedienung, wobei dieser Parallelwiderstand beispielsweise über die Entladekurve bestimmt werden kann.

Diese Schicht 9' kann durch einen weiteren Bedruckungsvorgang auf den kapazitiven Touchsensor des Anzeigeelements 2 aufgebracht werden. Die Materialauswahl und Dicke der Beschichtung 9' sollte zweckmäßigerweise so erfolgen, dass der Widerstand groß genug ist, um die normale Messung der Kapazität für die Bedienung durch den Finger 5 möglichst wenig zu beeinflussen und/oder eine gute Transmission für das Licht zu bieten.

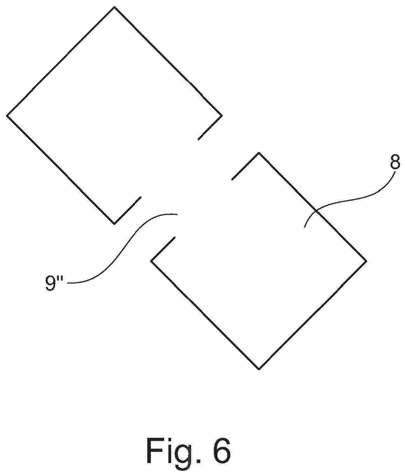

In einer zweiten, erfindungsgemäßen Ausführung, die näher in Fig. 6 gezeigt ist, ist ein Material 9" auf dem Anzeigeelement 2 als Sensor 4 vorgesehen, welches bei Belichtung elektrische Ladungen in der Art des äußeren fotoelektrischen Effekts freisetzt und folglich eine die Ladung des Touchsensorkondensators verändernde elektrische Spannung erzeugt. Somit detektiert der eine entsprechende Beschichtung 9" des Anzeigeelements 2 umfassende Sensor 4 Helligkeitsänderungen des Anzeigeelements 2 mittels des Photoeffekts durch Freisetzung von Elektronen bei Lichteinfall. Diese lichtempfindliche Schicht 9" kann zwischen den einzelnen Flächen 8 und/oder auf diesen Flächen 8 aufgebracht werden, um einen größeren Bereich zu erfassen bzw. um im Falle der ersten Ausführung ein niederohmigeres Material 9' zu verwenden. Diese zusätzliche Schicht 9', 9" ist als ein transparenter Fotowiderstand oder Fotohalbleiter ausgeführt und kann durch Bedrucken als Beschichtung auf dem Anzeigeelement 2 aufgebracht sein.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung. Die Erfindung kann zudem nicht nur für Bedien- und/oder Anzeigevorrichtungen im Kraftfahrzeug Verwendung finden. Die Bedien- und/oder Anzeigevorrichtung lässt sich auch an sonstigen Geräten, beispielsweise für Haushaltsgeräte, Werkzeugmaschinen, Computersteuerungen o. dgl., einsetzen.

### Bezugszeichen-Liste:

- 1:: Bedien- und/oder Anzeigevorrichtung
- 2:: Anzeigeelement
- 3:: Bildelement / Bedienelement
- 4:: Sensor
- 5:: Objekt / Finger
- 6:: Hand
- 7:: Signal
- 8:: Fläche
- 9:: Isolatorschicht
- 9':: Schicht / Beschichtung / Material (mit helligkeitsveränderlicher Leitfähigkeit)
- 9":: (lichtempfindliche) Schicht / Beschichtung / Material
- 10:: Zeilenelektrode
- 11:: Spaltenelektrode

## Patentansprüche

1. Bedien- und/oder Anzeigevorrichtung für ein Kraftfahrzeug mit einem Anzeigeelement (2),
wobei wenigstens ein Bildelement (3) mittels sichtbarer Lichtstrahlung auf dem Anzeigeelement (2) darstellbar ist,
wobei ein Sensor (4) zur Überprüfung der Funktionsfähigkeit des Anzeigeelements (2) vorgesehen ist, der ausgebildet ist, die Darstellung des Bildelements (3) durch Helligkeitsänderungen auf dem Anzeigeelement (2) zu detektieren,
**dadurch gekennzeichnet, dass** der Sensor (4) eine Beschichtung (9") des Anzeigeelements umfasst, deren Material durch Licht elektrische Ladungen freisetzt.

2. Bedien- und/oder Anzeigevorrichtung nach Anspruch 1, **dadurch gekennzeichnet, dass** es sich bei dem Bildelement (3) um die Darstellung eines Bedienelements handelt, wobei mittels eines Objekts (5) auf das Bedienelement (3) einwirkbar ist, derart, dass ein zur Einwirkung korrespondierendes Signal (7) erzeugbar ist.

3. Bedien- und/oder Anzeigevorrichtung nach Anspruch 2,
wobei das Objekt (5) ein menschlicher Finger ist.

4. Bedien- und/oder Anzeigevorrichtung nach Anspruch 2 oder 3,
wobei das zur Einwirkung korrespondierende Signal (7) ein Schaltsignal zum Bedienen und/oder Auslösen einer Funktion ist.

5. Bedien- und/oder Anzeigevorrichtung nach einem der Ansprüche 2 bis 4,
wobei das Anzeigeelement (2) als eine kapazitive Touchfläche ausgebildet ist.

6. Bedien- und/oder Anzeigevorrichtung nach einem der Ansprüche 1 bis 5, **dadurch gekennzeichnet, dass** der Sensor (4) Helligkeitsänderungen mittels einer Änderung des elektrischen Widerstands am Anzeigeelement (2) detektiert.

7. Bedien- und/oder Anzeigevorrichtung nach einem der Ansprüche 1 bis 6, **dadurch gekennzeichnet, dass** der Sensor (4) eine Beschichtung (9') des Anzeigeelements (2) umfasst, deren Widerstand sich über die Helligkeit ändert.

8. Bedien- und/oder Anzeigevorrichtung nach einem der Ansprüche 1 bis 7, **dadurch gekennzeichnet, dass** der Sensor (4) Helligkeitsänderungen mittels des Photoeffekts detektiert.

9. Bedien- und/oder Anzeigevorrichtung nach einem der Ansprüche 1 bis 8, **dadurch gekennzeichnet, dass** die Beschichtung (9', 9") durch Bedrucken auf dem Anzeigeelement (2) aufgebracht ist.

## Claims

1. An operator control and/or display device for a motor vehicle with a display element (2),
wherein at least one image element (3) is representable on the display element (2) by means of visible light radiation,
wherein a sensor (4) is provided for checking functionality of the display element (2), which is configured to detect the representation of the image element (3) through brightness changes on the display element (2),
**characterised in that** the sensor (4) comprises a coating (9") of the display element, the material of which releases electrical charges through light.

2. The operator control and/or display device according to claim 1, **characterised in that** the image element (3) is a representation of an operator control element, wherein the operator control element (3) is able to be acted on by means of an object (5) in such a way that a signal (7) corresponding to the action is generatable.

3. The operator control and/or display device according to claim 2,
wherein the object (5) is a human finger.

4. The operator control and/or display device according to claim 2 or 3,
wherein the signal (7) corresponding to the action is a switching signal for controlling and/or triggering a function.

5. The operator control and/or display device according to any one of claims 2 to 4,
wherein the display element (2) is configured as a capacitive touch surface.

6. The operator control and/or display device according to any one of claims 1 to 5, **characterised in that** the sensor (4) detects brightness changes by means of a change in the electrical resistance at the display element (2).

7. The operator control and/or display device according to any one of claims 1 to 6, **characterised in that** the sensor (4) comprises a coating (9') of the display element (2), the resistance of which changes via the brightness.

8. The operator control and/or display device according to any one of claims 1 to 7, **characterised in that** the sensor (4) detects brightness changes by means of the photo effect.

9. The operator control and/or display device according to any one of claims 1 to 8, **characterised in that** the coating (9', 9") is applied to the display element (2) by printing.

## Revendications

1. Dispositif de commande et/ou d'affichage pour un véhicule automobile, comprenant un élément d'affichage (2),
dans lequel au moins un élément d'image (3) peut être représenté sur l'élément d'affichage (2) au moyen d'un rayonnement lumineux visible,
dans lequel un capteur (4) est prévu pour vérifier la fonctionnalité de l'élément d'affichage (2), lequel est configuré pour détecter la représentation de l'élément d'image (3) par des variations de luminosité sur l'élément d'affichage (2),
**caractérisé en ce que** le capteur (4) comprend un revêtement (9") de l'élément d'affichage, dont le matériau libère des charges électriques sous l'effet de la lumière.

2. Dispositif de commande et/ou d'affichage selon la revendication 1, **caractérisé en ce que** l'élément d'image (3) est la représentation d'un élément de commande, dans lequel il est possible d'agir sur l'élément de commande (3) au moyen d'un objet (5), de telle sorte qu'un signal (7) correspondant à l'action peut être généré.

3. Dispositif de commande et/ou d'affichage selon la revendication 2,
dans lequel l'objet (5) est un doigt humain.

4. Dispositif de commande et/ou d'affichage selon la revendication 2 ou 3,
dans lequel le signal (7) correspondant à l'action est un signal de commutation pour la commande et/ou le déclenchement d'une fonction.

5. Dispositif de commande et/ou d'affichage selon l'une des revendications 2 à 4,
dans lequel l'élément d'affichage (2) est configuré sous forme de surface tactile capacitive.

6. Dispositif de commande et/ou d'affichage selon l'une des revendications 1 à 5, **caractérisé en ce que** le capteur (4) détecte des variations de luminosité au moyen d'une variation de la résistance électrique au niveau de l'élément d'affichage (2).

7. Dispositif de commande et/ou d'affichage selon l'une des revendications 1 à 6, **caractérisé en ce que** le capteur (4) comprend un revêtement (9') de l'élément d'affichage (2), dont la résistance varie en fonction de la luminosité.

8. Dispositif de commande et/ou d'affichage selon l'une des revendications 1 à 7, **caractérisé en ce que** le capteur (4) détecte des variations de luminosité au moyen de l'effet photoélectrique.

9. Dispositif de commande et/ou d'affichage selon l'une des revendications 1 à 8, **caractérisé en ce que** le revêtement (9', 9") est appliqué sur l'élément d'affichage (2) par impression.
